# EUROPEAN PATENT APPLICATION

(11) **EP 2 249 281 A1**
(43) Date of publication of application: **10.11.2010**
(21) Application number: 09703902.8
(22) Date of filing: 15.01.2009
(51) Int. Cl.: G06F 21/24, G06F 21/00

(54) **SERVER, SYSTEM, AND CONTENT DISPLAY CONTROL METHOD**

(30) Priority: 21.01.2008 JP 2008010262
(71) Applicant: Sharp Kabushiki Kaisha, Osaka-shi, Osaka 545-8522 (JP)
(72) Inventor: URAZOE, Koichi, Osaka 545-8522 (JP); TOJIMA, Akira, Osaka 545-8522 (JP)
(74) Representative: Treeby, Philip David William
(86) International application number: PCT/JP2009/050479
(87) International publication number: WO 2009/093518

(57) **Abstract**

A system allowing an authorized user to view information in a server from a point far away from the server, and preventing leakage of information in the server is provided. For this purpose, a management server 26 includes: a first communication unit 90 for communication with a terminal, not shown; a storage unit 98 storing, in addition to content, terminal use schedule for specifying date and time and location in association with a terminal identifier; a time measuring unit 100; and a control unit 102 connected to the first communication unit 90, the storage unit 98 and the time measuring unit 100. When the first communication unit 90 receives a content distribution requests from a terminal and the identifier of the terminal is stored in storage unit 98, the control unit 102 performs the following process. The time of distribution request obtained from the time measuring unit 98 and the location information related to the terminal included in the distribution request are compared with the terminal use schedule stored in storage unit 98 in association with the identifier of the terminal, and depending on the result of comparison, the content is distributed to the terminal.

## Description

### TECHNICAL FIELD

The present invention relates to an information viewing system including a terminal utilizing wireless communication and, more specifically, to a technique for preventing leakage of information.

### BACKGROUND ART

Recently, systems allowing viewing of information in a server from a distant place using a mobile terminal such as a portable telephone come to be popular. Such a system allows the user to view information in the server using a terminal, even at a place away from the server. Therefore, such systems are widely used, for example, by a company member having a terminal to download information in a company server to his/her terminal at a business trip destination for use at business negotiations, or to view in-company data in a spare time on the road to conduct other business. The system allowing viewing of in-company information using a mobile terminal realizes, during a business trip, an environment that enables business handling at any place.

The system, however, involves a risk of possible leakage of information in the specific server to a third party. Therefore, authentication control mainly regarding the following two points is essential in the system.
1) Authentication as to whether the terminal that requested an access is an authorized terminal belonging to the system.
2) Authentication as to whether the user is an authorized user of the system.
   As a solution to this problem, Patent Document 1 discloses a technique of deciding permission/denial of an access to the server using a telephone number of a terminal (portable telephone) as an identification code, in a system similar to the above. In the server, telephone numbers of access-permitted terminals are registered in advance. A terminal of which telephone number is registered is allowed to view information related to a group to which the terminal belongs, stored in the server. On the other hand, access by a non-registered terminal is denied. By this technique, authentication control 1) above is attained to some extent. It is possible, however, to use a fake telephone number. Therefore, it is difficult to fully prevent accesses by unauthorized terminals. If an authorized terminal is stolen and fell into the hands of an unauthorized user, leakage of information in the server cannot be prevented.

In view of this problem, Patent Document 2 proposes a system in which an access to a specific server is limited utilizing an identifier of a terminal and an access location. In this system, for each access point of wireless LAN, terminals and access locations allowed to make access to the point are set beforehand.
Therefore, information in the server can be viewed only when the set terminal makes an access request from a set access location. By this system, as the number of authentication items is increased, an environment more secure than that of Patent Document 1 can be attained.
- Patent Document 1:: Japanese Patent Laying-Open No. 2002-304502
- Patent Document 2:: Japanese Patent Laying-Open No. 2004-46666

### DISCLOSURE OF THE INVENTION

### PROBLEMS TO BE SOLVED BY THE INVENTION

In the apparatus described in Patent Document 2, the problem of unauthorized user cannot fully be solved, since it is possible for an ill-intended third party above-described to make an access to the server from an access-permitted location and time.

Further, considering a situation in which a company member views in-company data on a business trip, the system described in Patent Document 2 is impractical. Even a business trip in Japan, for example, a trip from Tokyo to Osaka, involves long distance movement of a few hundred kilometers. Formidable amount of money and time are required to set specific wireless LAN points to cover such a large area.

Therefore, an object of the present invention is to provide a system that allows an authorized user to view information in a server from a point far from the server and that prevents leakage of information in the server.

### MEANS FOR SOLVING THE PROBLEMS

According to a first aspect, a server for distributing content to a prescribed terminal includes a storage device for storing terminal use schedules indicating scheduled use of the terminal in association with an identifier of the terminal. Each of the terminal use schedules includes one or a plurality of planned activities. Each of the planned activities includes a date and time item specifying date and time, and a location item specifying expected position of the terminal at the corresponding date and time. The server further includes a receiving device for receiving a distribution request related to the content. The distribution request includes an identifier of a transmission terminal that transmitted the distribution request, position information, and an identifier of content of which distribution is requested. The server further includes: a time measuring device for specifying date and time of reception of the distribution request; a distribution control device comparing the position information included in the distribution request and the date and time of reception specified by the time measuring device, with the terminal use schedule stored in the storage device in association with the identifier of the transmission terminal included in the distribution request, and thereby deciding whether or not the content is to be distributed; and a distributing device, responsive to decision by the distribution control device to distribute the content, for distributing the content identified by the content identifier to the transmission terminal.

Before a prescribed terminal makes a request for content distribution, the storage device stores an identifier of the terminal that will make a request for content distribution in association with an activity plan identifying the date and time and location on which the request for content distribution will be made. Upon receiving the request of content distribution, the receiving device receives, in addition to the content identifier, the identifier of the transmission terminal that requested the distribution, and position information related to the distribution request. If the received identifier of the transmission terminal is stored in the storage device, the distribution control device compares the received position information and the date and time of reception of the distribution request with the activity plan included in the use schedule of the terminal stored in the storage device in association with the identifier, and decides whether or not the content is to be distributed. If it is decided from the result of comparison that the content is to be distributed, the distributing device distributes the content to the transmission terminal.

If the terminal requests content distribution from the location and at the date and time as scheduled for content distribution request stored beforehand in the server, the server distributes the content to the terminal. If the date or time, location or the terminal that requested distribution is different from the planned one by some cause or other, the server does not distribute the content. By the server as such, it becomes possible to view information in the server from a terminal in a secure environment.

Preferably, the distribution control device includes: a use schedule reading device for reading, from the storage device, the terminal use schedule associated with an identifier of the transmission terminal included in the distribution request from among the terminal use schedules; a first determining device for determining whether or not the date and time of reception and the position information included in the distribution request match a planned activity specified by the date and time item and the location item included in one or a plurality of planned activities included in the terminal use schedule read by the use schedule reading device; a second determining device, responsive to determination by the first determining device that the date and time of reception and the position information included in the distribution request do not match the specified planned activity, for determining whether or not the position information matches an expected route of movement specified by two date and time items and two pieces of position information included in continuous two planned activities read by the use schedule reading device; and a deciding device for deciding distribution of content, if the first determining device or the second determining device determines that the date and time of reception and the position information included in the distribution request match the specified planned activity or the specified expected route of movement.

If a content distribution request is received from a terminal whose identifier is stored in the storage device, the first determining device compares the received position information and the date and time of reception of the distribution request with the activity plan stored in association with the identifier in the storage device. If the date and time of reception and the position indicated by the position information match the date and time and location specified by any of the activities planned, the first determining device determines distribution of content. If the date and time of reception and the position indicated by the position information do not match any of the date and time or location specified by the activity plan, the second determining device determines distribution of content if an expected route of movement specified by two pieces of position information of continuous two planned activities matches the position indicated by the position information.

If a plurality of pieces of planned activity information specifying date and time and position of requesting content distribution are stored in advance, the server distributes content in response to a distribution request made on the stored date and time at the position associated with the date and time, and in response to a distribution request made on an expected route of movement determined by continuous two planned activities. Otherwise, the content is not distributed. Thus, by the present server, it becomes possible to view information in the server from a terminal in a secure environment.

Preferably, the server further includes a content storage device for storing the content; and a user information storage device for storing information of a user using the terminal. The user information storage device stores, as the user information, access permission folder information indicating a storage area in the content storage device storing where the content of which distribution to the user is permitted is stored. The terminal use schedule includes the user information. The server further includes a device, responsive to storage of the terminal use schedule in the storage device, for forming a list of content identifiers of the content stored in the storage area of the content storage device designated by the access permission folder information of the user, and transmitting the list to the terminal.

The server records content of which distribution to the terminal user is permitted, with the storage area of the content storage device partitioned. The access permission folder information represents the storage area permitted user by user. In response to storage of use schedule of a terminal in the storage device, the server looks up the storage area, forms a list of content identifiers of included content, and transmits it to the terminal.

The area for storing distribution-permitted content differs user by user of terminals, and a list of content identifiers of distributable content is transmitted in response to storage of a use schedule. Since the list of viewable content is formed user by user of terminals, it becomes possible to prevent disclosure of content identifier unrelated to the user. As a result, more secure environment for viewing information in the server can be maintained.

More preferably, the server further includes a display device for displaying various pieces of information; and a device for displaying the terminal use schedule on the display device.

Since the display device is used, the use schedule can more reliably be confirmed, and unauthorized application for terminal use can be prevented.

Preferably, the server further includes a device, responsive to an instruction to store or not to store use schedule of the terminal in the storage device, for transmitting a message of permission or denial of registration of the use schedule, respectively, to the terminal.

Since the registration status of terminal use schedule is notified, it becomes possible to let the terminal user know the registration status and, hence, unnecessary accumulative registration of use schedule can be prevented.

Preferably, the location information includes position information, and the position information is latitude and longitude information.

The terminal position can more accurately be grasped using the latitude and longitude information transmitted from the terminal, and if it goes off from the planned location of use, content distribution is stopped. As a result, more secure information management can be realized.

Preferably, the server further includes a device, responsive to decision by the deciding device to distribute or not to distribute the content, for transmitting an access permission notice or an access denial notice, respectively, to the terminal.

In accordance with the decision made by the deciding device, an access permission notice or an access denial notice is distributed and, therefore, quick distribution handling is possible immediately if the received terminal information comes to fail to satisfy the conditions of content distribution. As a result, more secure environment of information distribution can be maintained.

According to a second aspect, the present invention provides a content distribution system including a prescribed terminal and a server for distributing content to the terminal. The server includes a storage device for storing terminal use schedules indicating scheduled use of the terminal in association with an identifier of the terminal. Each of the terminal use schedules includes one or a plurality of planned activities. Each of the planned activities includes a date and time item specifying date and time, and a location item specifying expected position of the terminal at the corresponding date and time. The terminal includes: a position information obtaining device for obtaining position information indicating a position where the terminal is present; and a distribution requesting device for transmitting a content distribution request including an identifier of the terminal, the position information and a content identifier of the content of which distribution from the server is requested. The server further includes: a receiving device for receiving the distribution request related to the content from the terminal; a time measuring device for specifying date and time of reception of the distribution request; a distribution control device comparing the position information included in the distribution request and the date and time of reception specified by the time measuring device, with the terminal use schedule stored in the storage device in association with the identifier of the terminal included in the distribution request, and thereby deciding whether or not the content is to be distributed; and a distributing device, responsive to decision by the distribution control device to distribute the content, for distributing the content identified by the content identifier to the terminal. The terminal further includes a content display device for receiving and displaying the content distributed from the server to the terminal in response to the distribution request.

Before a prescribed terminal makes a request for content distribution, the server stores an identifier of the terminal that will make a request for content distribution in association with an activity plan identifying the date and time and location on which the request for content distribution will be made. When making a content distribution request, the terminal transmits, in addition to the content identifier, the identifier and position in formation of the terminal to the server. The server receives the content distribution request from the terminal, and if the received identifier of the terminal is stored in the storage device, the server compares the received position information and the date and time of reception of the distribution request with the activity plan included in the use schedule of the terminal stored in the storage device in association with the identifier, and decides whether or not the content is to be distributed. If it is decided from the result of comparison that the content is to be distributed, the server distributes the content to the transmission terminal. The terminal displays the content distributed from the server.

In the present system, if the terminal requests content distribution from the location and at the date and time as scheduled for content distribution request stored beforehand in the server, the server distributes the content to the terminal. If the date or time, location or the terminal that requested distribution is different from the planned one by some cause or other, the server does not distribute the content. By the present system, it becomes possible to view information in the server from a terminal in a secure environment.

Preferably, in the content distribution system, the distribution control device in the server includes: a use schedule reading device for reading, from the storage device, the terminal use schedule associated with an identifier of the transmission terminal included in the distribution request from among the terminal use schedules; a first determining device for determining whether or not the date and time of reception and the position information included in the distribution request match a planned activity specified by the date and time item and the location item included in one or a plurality of planned activities included in the terminal use schedule read by the use schedule reading device; a second determining device, responsive to determination by the first determining device that the date and time of reception and the position information included in the distribution request do not match the specified planned activity, for determining whether or not the position information matches an expected route of movement specified by two date and time items and two pieces of position information included in continuous two planned activities read by the use schedule reading device; and a deciding device for deciding distribution of content, if the first determining device or the second determining device determines that the date and time of reception and the position information included in the distribution request match the specified planned activity or the specified expected route of movement.

Preferably, in the content distribution system, the server further includes: a content storage device for storing the content; and a user information storage device for storing information of a user using the terminal. The user information storage device stores, as the user information, access permission folder information indicating a storage area in the content storage device storing where the content of which distribution to the user is permitted is stored. The terminal use schedule includes the user information. The server further includes a device, responsive to storage of the terminal use schedule in the storage device, for forming a list of content identifiers of the content stored in the storage area of the content storage device designated by the access permission folder information of the user, and transmitting the list to the terminal. The terminal further includes a device for receiving and displaying the list of content identifiers transmitted by the device for transmitting to the terminal.

Preferably, in the content distribution system, the server further includes a device, responsive to an instruction to store or not to store use schedule of the terminal in the storage device, for transmitting a message of permission or denial of registration of the use schedule, respectively, to the terminal. The terminal further includes a device for receiving and displaying the message from the transmitting device.

Preferably, in the content distribution system, the server further includes a display device for displaying various pieces of information, and a device for displaying use schedule of the terminal on the display device.

Preferably, in the content distribution system, the location information includes position information, and the position information is latitude and longitude information.

Preferably, in the content distribution system, the server further includes a device, responsive to decision by the deciding device to distribute or not to distribute the content, for transmitting an access permission notice or an access denial notice, respectively, to the terminal. The terminal further includes device for receiving the access permission notice or the access denial notice, and for performing a corresponding process, respectively.

According to a third aspect, the present invention provides a method of controlling content display in a content distribution system including a server responsive to a content distribution request transmitted from an arbitrary terminal, for distributing the content to the terminal that transmitted the distribution request, a terminal transmitting a content distribution request to the server and for displaying the content distributed from the server in response to the distribution request, and a storage device for storing terminal use schedules indicating use schedule of the terminal. Each of the terminal use schedules includes one or a plurality of planned activities, and each of the planned activities includes a date and time item specifying date and time, and a location item specifying expected position of the terminal at the corresponding date and time. The method includes the steps of: comparing position information and date and time information of the terminal, using a time point when the terminal transmits the distribution request to the server as a start point, with the terminal use schedule stored in the storage device; and depending on the result of comparison at the comparing step, enabling or disabling display of content distributed from the server to the terminal in response to the distribution request.

Specifically, the storage device stores in advance an activity plan specifying date and time and location on which a terminal is planned to make a content distribution request. When a terminal transmits a content distribution request to the server, the position information and the date and time information of the terminal at the time of transmission are compared with the activity plan stored in the storage device. At the content display control step, display of content distributed from the server to the terminal in response to the distribution request is enabled or disabled depending on the result of comparison.

If the terminal requests content distribution from the location and at the date and time as scheduled for content distribution request stored beforehand, the content is displayed on the terminal. If the date or time, location or the terminal that requested distribution is different from the planned one by some cause or other, the content is not displayed on the terminal. By the present content display control method, it becomes possible to view information in the server from a terminal in a secure environment.

The comparing step of the content display control method involves control on the terminal side, control on the server side and control both on the terminal and the server.

As regards the control on the terminal side, if a prescribed relation cannot be found between the position and date and time information when the distribution request process is executed by the terminal and the activity plan from the result of comparison at the comparing step, the distribution request from the terminal to the server is not made at the content display control step.

As regards the control on the server side, the storage device stores terminal use schedules of an arbitrary number of terminals. At the comparing step, it is necessary that the terminal use schedule of the terminal that transmitted the distribution request must be identified among the plurality of terminal use schedules. Therefore, here, the storage device stores the activity plan in association with the identifier of the terminal that transmitted the distribution request.

As regards the control both on the terminal side and the server side, comparison at the comparing step is done both by the terminal and the server. This is to prevent erroneous processing at the comparing step. Comparison is made both by the terminal and the server, and display of content of which distribution has been requested on the terminal is realized only when prescribed relation is found between the planned activity and the date and time and position information of the terminal by both the server and the terminal.

The erroneous processing at the comparing step may include, for example, a time measuring device in the terminal measuring time different from the actual time, with the measurement influencing the date and time information of the terminal. This may result in a fraudulent determination at the comparing step, realizing content display on the terminal on the date and time and/or location different from the activity plan. Such a situation may occur, since setting of the time measuring device in the terminal can be changed by the user.

Further, in relation to the server control, traffic of communication infrastructure between the terminal and the server may be jammed, resulting in a time difference between the time when the terminal made distribution request to the server and the time when the comparing step is executed. In such a case, the position and date and time information of the terminal as the object of comparison may be different from the actual state.

As a specific solution to the problem described above, an embodiment may be possible in which the comparing step is executed both by the terminal and the server when the first distribution request of the day is made, and thereafter the control is passed to the server side. By such an approach, it becomes possible to view information in the server from a terminal in a more secure environment.

### EFFECTS OF THE INVENTION

As described above, by the system in accordance with the present invention, it is possible for an authorized user to view information in the server in a secure environment, from a position far away from the server. In the present system, even if an access is made from an authorized terminal, information in the server cannot be viewed unless the access is made on the date and time and the location specified by the activity plan stored in advance in the server or on an expected route of movement specified by two continuous activities planned. Therefore, even if an authorized terminal belonging to the system should be stolen, it is difficult for an unauthorized user to view the in-company data. As a result, the risk of information leakage can be reduced.

### BRIEF DESCRIPTION OF THE DRAWINGS

Fig. 1 is a schematic block diagram of a system 10 in accordance with a first embodiment of the present invention.
Fig.2 is a schematic block diagram of a terminal 20 shown in Fig. 1.
Fig. 3 is a schematic block diagram of a management server 26 shown in Fig. 1.
Fig. 4 is a schematic illustration showing an image displayed on terminal 20, allowing an applicant for business trip to carry out a business trip application process.
Fig. 5 is a schematic illustration showing an image displayed on terminal 20, allowing the applicant for business trip to view in-company data.
Fig. 6 shows configurations of packet data transmitted/received between terminal 20 and management server 26.
Fig. 7 shows a configuration of a company member DB 360 stored in a storage unit 98 shown in Fig. 3.
Fig. 8 is a flowchart of a main program for the business trip application and in-company data viewing processes, executed by a CPU 70 shown in Fig. 2.
Fig. 9 is a flowchart of the program for the business trip application process activated at step 400 of Fig. 8.
Fig. 10 is a flowchart of a program for approving a business trip, executed by a CPU 110 shown in Fig. 3.
Fig. 11 is a flowchart of a program for executing in-company data viewing activated at step 404 of Fig. 8.
Fig. 12 is a flowchart of a process executed in response to the determination of YES at step 464 of Fig. 11.
Fig. 13 is a flowchart of a program for user authentication of terminal 20, executed by CPU 110 shown in Fig. 3.
Fig. 14 is a flowchart of a program for a distribution request response of terminal 20, executed by CPU 110 shown in Fig. 3.
Fig. 15 is a flowchart of a program for checking terminal position of terminal 20, executed by CPU 110 shown in Fig. 3.
Fig. 16 is a flowchart of a program for access permission/denial determination activated at step 514 of Fig. 13, step 534 of Fig. 14 and step 552 of Fig. 15.

### DESCRIPTION OF THE REFERENCE SIGNS

10 system, 20 terminal, 22 Internet, 224 in-house LAN, 40 telephone network communication unit, 42 wireless communication unit, 44 first antenna, 46 second antenna, 48 audio input/output unit, 50, 94 display unit, 52, 96 operation unit, 54, 98 storage unit, 56 GPS, 58, 100 time measuring unit, 60, 102 control unit, 70, 110 CPU, 72, 112 ROM, 74, 114 RAM, 90 first communication unit, 92 second communication unit.

### BEST MODES FOR CARRYING OUT THE INVENTION

In the following, the information viewing system in accordance with an embodiment of the present invention will be described. In the following description and in the drawings, the same components are denoted by the same reference characters and same names. Their functions are also the same. Therefore, detailed description thereof will not be repeated.

In the system in accordance with an embodiment of the present invention described in the following, a user of a terminal transmits to a server, in advance, the date and time and location on which he/she intends to view the information in the server from a terminal at a distance place. The terminal and the server each store the scheduled date and time and the location of the viewing. Thereafter, when the user of the terminal requests viewing of the information in the server, the server permits viewing of the information in the server from the terminal, if a prescribed relation is found between the time of request and the position of the terminal and the stored scheduled date and time and the location of the viewing (for example, if the date and time and location match). The authentication control regarding the two points described above, that is, authentication as to whether 1) the terminal is an authorized terminal and whether 2) the user is an authorized user is attained based on the identifier of the terminal and the password. The information in the server is viewed through a portable telephone network. Therefore, if the terminal is in the communication service area of portable telephone, it is possible to view the information in the server.

It is noted that the system described in the embodiment below is used in a company to allow a company member to view in-company information through a terminal during a business trip. Before the business trip, a business trip application is transmitted from the terminal to the server. The server conducts approval process on the business trip application. Only the access from the specific terminal and the user on the date and time and location related to the approved business trip is permitted by the server. The present invention, however, is not limited to such an embodiment.

### [First Embodiment]

### [Configuration]

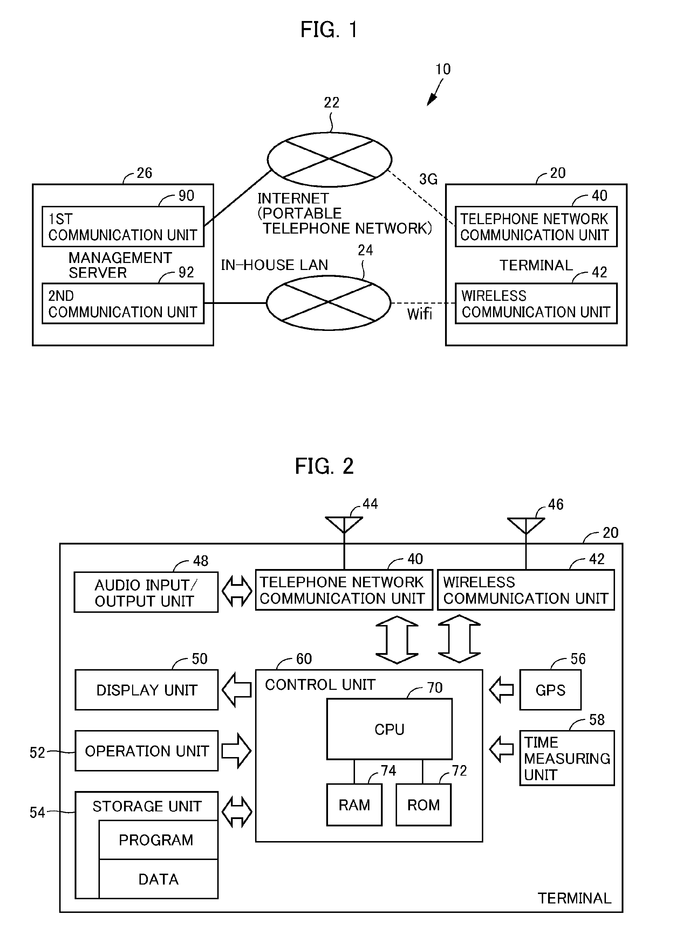

Fig. 1 is a block diagram showing the outline of an in-company information viewing system in accordance with the first embodiment. Referring to Fig. 1, system 10 includes a terminal 20 having a telephone function and the like, and a plurality of other terminals, not shown, and a management server 26.

Terminal 20 and other terminals basically have the same configuration. Therefore, in the following, only the basic configuration of terminal 20 will be described.

Terminal 20 includes a telephone network communication unit 40 for wireless communication with the Internet 22 through a portable telephone network referred to as 3G (3rd Generation), and a wireless communication unit 42 for wireless communication with in-house LAN (Local Area Network) 24 through WiFi (Wireless Fidelity).

Terminal 20 has an S/N (Serial Number) as an identifier on the system, allocated by a system administrator, and one terminal is allocated to one company member using the system. S/N will be described later. In the following, a company member to whom terminal 20 is allocated will be referred to as a business trip applicant.

Management server 26 includes a first communication unit 90 connected to the Internet 22, for communication with terminal 20 outside the communicable area of in-house LAN 24 through the Internet 22, and a second communication unit 92 connected to in-house LAN 24, for communication with terminal 20 inside the communicable area of in-house LAN 24.

In the present embodiment, management server 26 is used by a company member of a position to approve any business trip application. Management server 26 processes business trip applications from a plurality of terminals including terminal 20, and processes requests for viewing information in the server. In the following, a company member who uses management server 26 will be referred to as a business trip approver.

Further, in the following, for convenience of description, it is assumed that management server 26 receives and processes business trip application and request for viewing information in the server only from terminal 20. It is assumed that after applying for a business trip, terminal 20 executes only the process related to the business trip application and the viewing of information in the server until the business trip application is denied, or after the approval of business trip application, until the business trip ends. It is assumed that after approving the business trip application received from terminal 20, management server 26 executes only the process related to the business trip application and the viewing of information in the server.

Fig. 2 is a block diagram schematically showing terminal 20. Referring to Fig. 2, in addition to telephone network communication unit 40 and wireless communication unit 42, terminal 20 includes: a first antenna 44 connected to telephone network communication unit 40 for communication with the Internet 22; a second antenna 46, connected to wireless communication unit 42, for communication with in-house LAN 24; an audio input/output unit 48 connected to telephone network communication unit 40, for inputting/outputting voice through telephone network communication unit 40; a display unit 50, for displaying images related to business trip application and the viewing of in-company data desired by the business trip applicant; an operation unit 52 converting an input by the business trip applicant to a control signal and outputting the signal to a control unit, which will be described later; a GPS 56 receiving a radio signal from a GPS (Global Positioning System) satellite to get position information of terminal 20 and outputting the information to a control unit 60, which will be described later; a time measuring unit 58; control unit 60, connected to telephone network communication unit 40, wireless communication unit 42, display unit 50, operation unit 52, GPS 56 and time measuring unit 58, respectively, for controlling these in accordance with a prescribed program, to realize the function of applying for business trip to management server 26, the function of viewing in-company data during business trip applied, and other general functions of the terminal such as the telephone function; and a storage unit 54, connected to control unit 60, for storing programs to be executed by control unit 60, information related to terminal 20 including S/N, route information of applied business trip when business trip application is done, and data distributed when in-company data is viewed.

Control unit 60 includes a CPU (Central Processing Unit) 70 realizing the above-described functions by executing the prescribed program mentioned above, and an ROM (Read Only Memory) 72 and an RAM (Random Access Memory) 74.

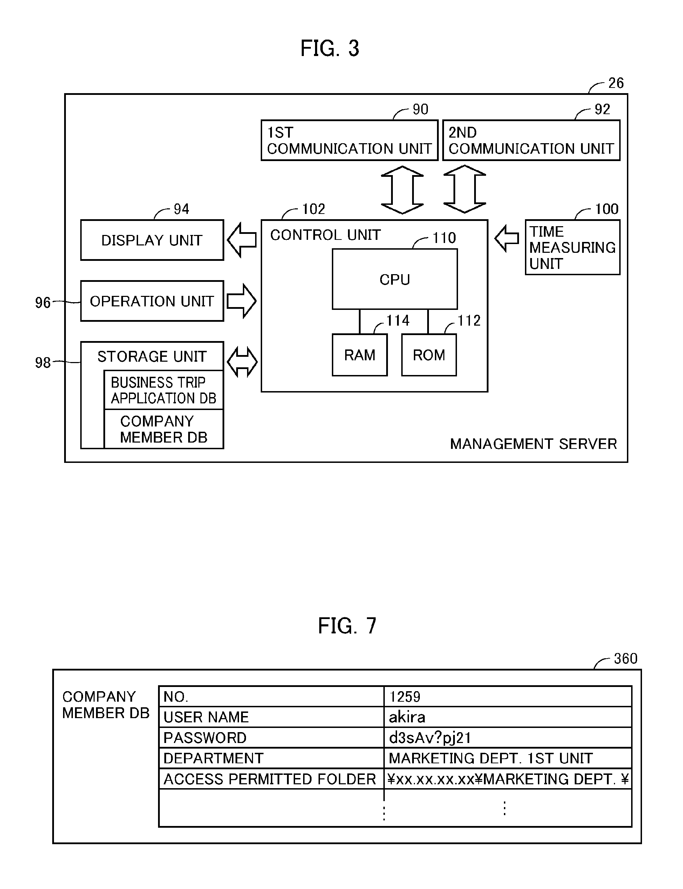

Fig. 3 is a block diagram schematically showing management server 26. Referring to Fig. 3, in addition to the first and second communication units 90 and 92, management server 26 includes: a display unit 94; an operation unit 96 converting a user input to a control signal and outputting the signal to a control unit, which will be described later; a time measuring unit 100; a control unit 102, connected to the first and second communication units 90 and 92, display unit 94, operation unit 96 and time measuring unit 100, for controlling these in accordance with a prescribed program, to realize the function of performing approving/rejecting the business trip application received from terminal 20, the function of permitting/denying request for viewing in-company data from terminal 20, and other general functions of a management server; and a storage unit 98, connected to control unit 102, for storing programs for realizing functions of control unit 102 and various data such as business trip application DB (Data Base), which will be described later, and a company member DB.

Control unit 102 includes a CPU (Central Processing Unit) 110 realizing the above-described functions by executing the prescribed program mentioned above, and an ROM (Read Only Memory) 112 and an RAM (Random Access Memory) 114.

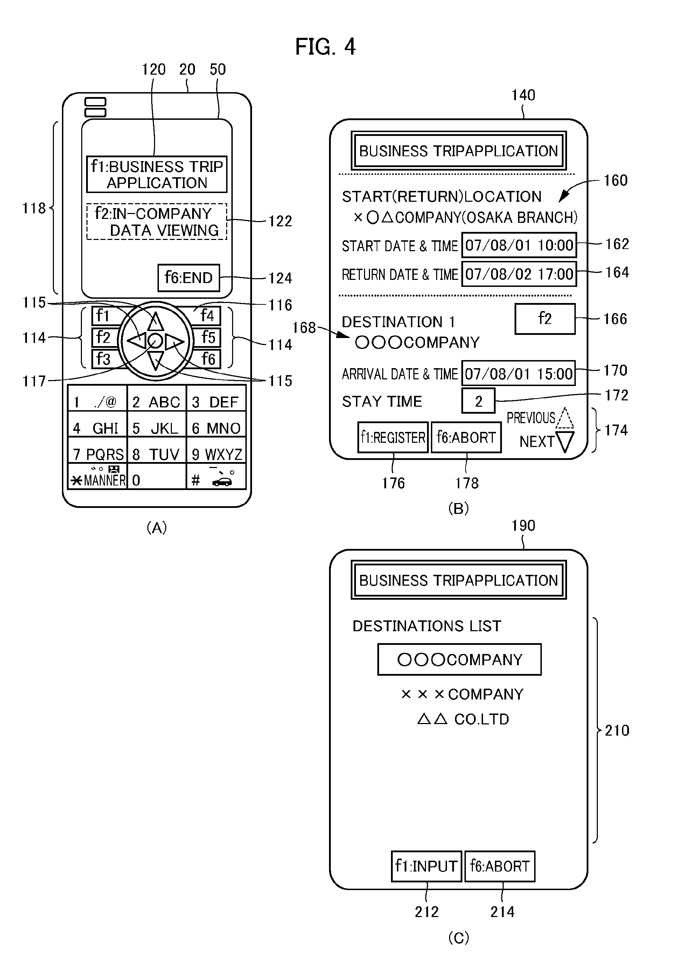

Fig. 4 shows an appearance of terminal 20 and exemplary images for executing the business trip application in accordance with an instruction by the business trip applicant, stored in storage unit 54 shown in Fig. 2 and displayed on display unit 50 of terminal 20.

Referring to Fig. 4(A), terminal 20 has a flat, rectangular parallelepiped shape, and includes a housing having a top surface on which display unit 50 and various button pads are provided. Various button pads include: buttons 114 of f1 to f6 provided below display unit 50, for displaying a menu image and for performing other processes; a cursor key 115 for moving a cursor position on display unit 50; an OK button 117 operated by the business trip applicant when a process of a button displayed on display unit 50 and selected by cursor key 115 is to be executed; and ten keys provided below buttons 114 of f1 to f6. When "f1" appears at the head of a character sequence displayed at the button portions displayed on display unit 50, in place of selecting the button by cursor key 115 and pressing OK button 117, corresponding one of buttons 114 of f1 to f6 may be pressed, to execute the same process. In the following, such operations will be simply referred to as "pressing."

An image 118 is an example of a menu image, displayed when an initial image is displayed and f1 button 116 is pressed, for performing the business trip application. Image 118 includes a BUSINESS TRIP APPLICATION button 120 for applying for a business trip; an IN-COMPANY DATA VIEWING button 122 for executing viewing of in-company data during the period of business trip applied by the business trip application; and an END button 124 for ending the process of business trip application and displaying an initial image on display unit 50. On image 118, BUSINESS TRIP APPLICATION button 120 and END button 124 are shown as selectable. IN-COMPANY DATA VIEWING button 122 is not selectable yet, as the business trip application has not been done.

Fig. 4(B) shows an image 140 displayed when BUSINESS TRIP APPLICATION button 120 shown in Fig. 4(A) is pressed, for receiving input of route information of the trip, in the business trip application. Referring to Fig. 4(B), image 140 includes, as a start (return) location, the name of business establishment 160 to which the business trip applicant belongs. The name of business establishment 160 is set in advance when the administrator of the present system allocates the terminal to each business trip applicant. The name of business establishment 160 cannot be changed by the business trip applicant.

Image 140 further includes: a box 162 for receiving an input of start time of the business trip; a box 164 for receiving an input of return time of the business trip; an f2 button for displaying an image showing destination candidates (business trip destinations); a destination name 168 selected on a destinations list image, which will be described later; a box 170 for receiving an input of arrival date and time at the destination; a box 172 for receiving an input of stay time at the destination; a page button 174 for displaying the previous or next page of route information; a REGISTRATION button 176 for registering the business trip application when input ends; and an ABORT button 178 for stopping the registration work and to have the display returned to image 118.

When REGISTRATION button 176 is pressed, the information input by that time point is stored in storage unit 54 shown in Fig. 2 and, thereafter, the display returns to image 118. In image 118 here, BUSINESS TRIP APPLICATION button 120 and IN-COMPANY DATA VIEWING button 122 are both unselectable until a response is received from management server 26 in connection with the business trip application.

The route information formed by the business trip application includes information related to a plurality of destinations. The pieces of information related to destinations have names allotted in time-sequentially ascending order, such as Destination 1, Destination 2.... Image 140 is for receiving, displaying and storing input of information related to Destination 1. When page button 174 is operated, the next page of image 140 is displayed, which includes similar displays, boxes and buttons. Pieces of information input on the next page are stored as information related to Destination 2, in storage unit 54. The same applies to the next page. Details of the route information will be described later.

Fig. 4(C) shows an image 190 displaying destination candidates displayed when f2 button 166 shown in Fig. 4(B) is pressed. Referring to Fig. 4(C), image 190 includes: a DESTINATION LIST 210 having destination candidates listed; an INPUT button 212 for registering, when a cursor is placed on one company in DESTINATION LIST 210 and the company is selected, the selected company as a destination; and an ABORT button 214 for stopping selection of destination and returning the display to image 140. After INPUT button 212 is pressed, image 140 with updated destination name is displayed.

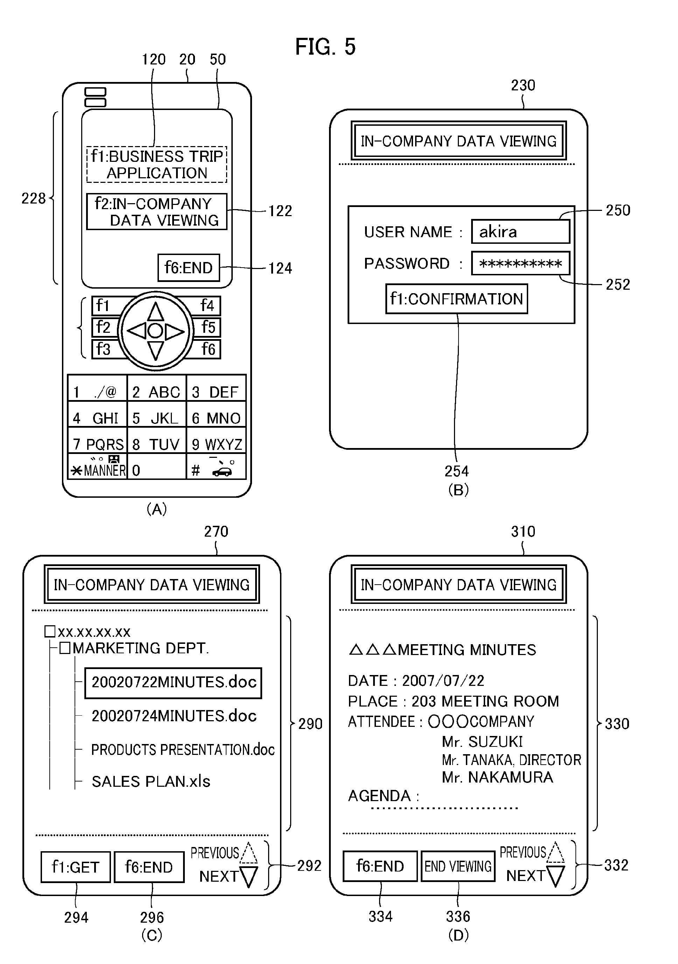

Fig. 5 shows an example of an image, stored in strage unit 54 shown in Fig.2, displayed on display unit 50, allowing the business trip applicant to execute viewing of in-company data during the business trip. Referring to Fig. 5(A), after the business trip application was filed and the business trip has been approved, when the initial image is displayed and f1 button 116 is pressed, an image 228 is displayed. Image 228 is similar to image 118 shown in Fig. 4(A), in which BUSINESS TRIP APPLICATION button 120 is set to an unselectable state while IN-COMPANY DATA VIEWING button 122 and END button 124 are in selectable states.

Fig. 5(B) shows an image 230 displayed when IN-COMPANY DATA VIEWING button 122 shown in Fig. 5(A) is pressed, for performing an authentication related to viewing of in-company data. Referring to Fig. 5(B), image 230 includes a box 250 for receiving an input of user name by the user, a box 252 for receiving a password, and a CONFIRMATION button 254 for executing an access to the in-company data after the input of user name and password.

Fig. 5(C) shows an image 270 displayed when CONFIRMATION button 254 is pressed after the input of user name and password to boxes 250 and 252 shown in Fig. 5(B) and an access to the in-company data by terminal 20 is permitted. Referring to Fig. 5(C), image 270 includes: a list 290 of data of which viewing by the user is permitted; a page button 292 for displaying a previous page or a next page of list 290; a GET button 294 for executing acquisition of data selected from list 290; and an END button 269 for ending the in-company data viewing and returning the display to image 228.

Fig. 5(D) shows an image 310 displayed when GET button 294 shown in Fig. 5(C) is pressed and the selected in-company data is acquired. Referring to Fig. 5(D), image 310 includes: acquired data 330; a page button 332 for displaying the previous page or the next page of acquired data 330; an END button 334 for ending display of data 330 and displaying image 270; and a VIEWING END button 336 for ending the in-company data viewing and returning the display to image 228.

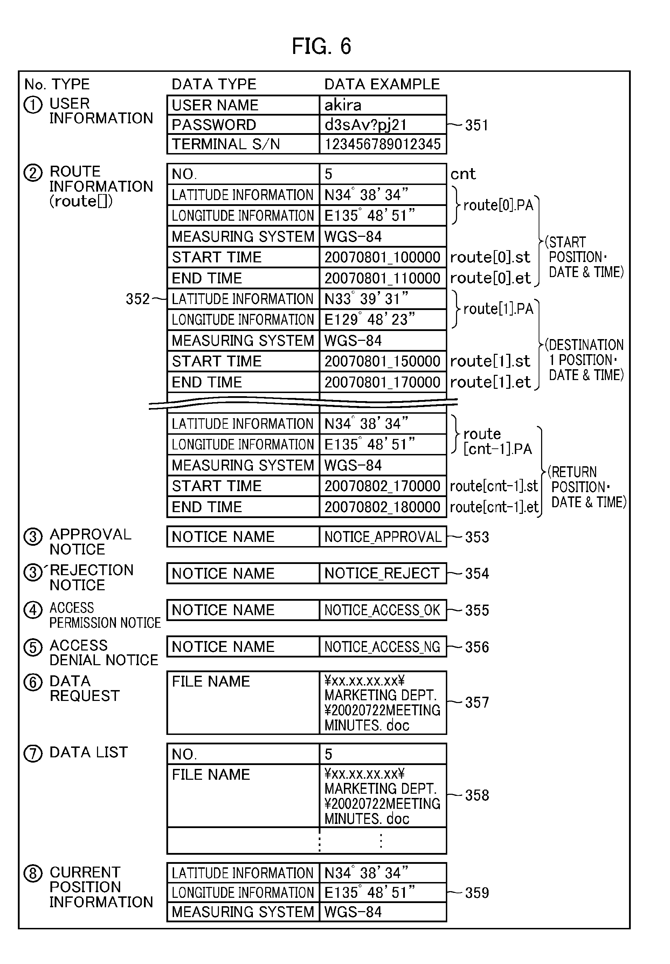

Fig. 6 shows data configurations of various packets transmitted/received between terminal 20 and management server 26, in the procedure of business trip application and in-company data viewing during the business trip applied. Referring to Fig. 6, the packets include: a user information packet 351; a route information packet 352; an approval notice packet 353; a rejection notice packet 354; an access permission notice packet 355; an access denial notice packet 356; a data request packet 357; a data list packet 358; and a current position information packet 359. Details of formation, transmission/reception and storage of these packets will be described later. The route information is stored in the same format as route information packet 352, in storage unit 54.

User information packet 351 includes pieces of information of user name, password and S/N of terminal 20. When the user inputs the user name and password, S/N stored in advance in storage unit 54 is added thereto, whereby user information packet 351 is formed, by CPU 70 shown in Fig. 2.

Route information packet 352 is formed by CPU 70 when the business trip application on terminal 20 is registered, and stored as a record (route information) in storage unit 54. Route information packet 352 includes: the number of places involved in the business trip (including a destination or destinations, start point and return point); latitude information and longitude information of each place; measuring system for the latitude and longitude information; and start and end time points of expected stay of the business trip applicant at each place. The packet is stored in correspondence with the user name information and the S/N information of the terminal, in a business trip application DB, which will be described later.

In Fig. 6, on the right side of route information packet 352, item names of records included in route information packet 352 are shown. Here, the number of places is denoted by cnt, latitude and longitude information by route[i].PA, start time by route[i].st, and end time by route[i].et. Integer values of 0 or not smaller than 1 are allotted time-sequentially to the places. The variable i assumes an integer value in the range of 0 ≤ i ≤ (cnt-1), indicating each place. For a business trip going through three places, the number of places is 5, including the start and return points (cnt = 5).

Approval notice packet 353, rejection notice packet 354, access permission notice packet 355 and access denial notice packet 356 are each formed by CPU 110 shown in Fig. 3 in management server 26, in accordance with communication with terminal 20, and transmitted to terminal 20. Approval notice packet 353 includes information that the business trip application is approved, and rejection notice packet 354 includes information that the application is rejected. Access permission notice packet 355 includes information that when an in-company data viewing request is made from terminal 20 during the applied business trip, the access will be permitted, and access denial notice packet 356 includes information that the access will not be permitted.

Data request packet 357 includes information of path and the like to the in-company data of which distribution is requested by terminal 20. Data request packet 357 is formed by CPU 70 when the business trip applicant selects data of which distribution is to be requested.

Data list packet 358 includes information related to the number of data of which viewing by the business trip applicant and by terminal 20 is permitted, and path and the like of each data.

Current position information packet 359 includes current position information of terminal 20 obtained by GPS 56 shown in Fig. 2, that is, latitude information, longitude information, and measuring system information of the latitude and longitude information. Current position information packet 359 is formed by CPU 70 every time GPS 56 obtains current position information of terminal 20 in accordance with a program process described later.

Fig. 7 shows an exemplary configuration of company member DB 360 stored in storage unit 98 of management server 26 shown in Fig. 3. Referring to Fig. 7, company member DB 360 consists of the number of data and record of each of the users (business trip applicants). Each record includes user name, password, department, and path information to a folder or folders of in-company data that can be accessed by the business trip applicant. Here, it is assumed that the business trip applicant is allowed to view data in a folder of a department to which he/she belongs.

Storage unit 98 stores a business trip application DB, not shown. Each record of business trip application DB includes the user name and terminal S/N information included in user information packet 351 and route information included in route information packet 352, transmitted from terminal 20 for which business trip application has been approved.

Besides, storage unit 98 stores data list information of which viewing by terminal 20 is possible, included in data list packet 358 related to terminal 20, in association with the terminal S/N.

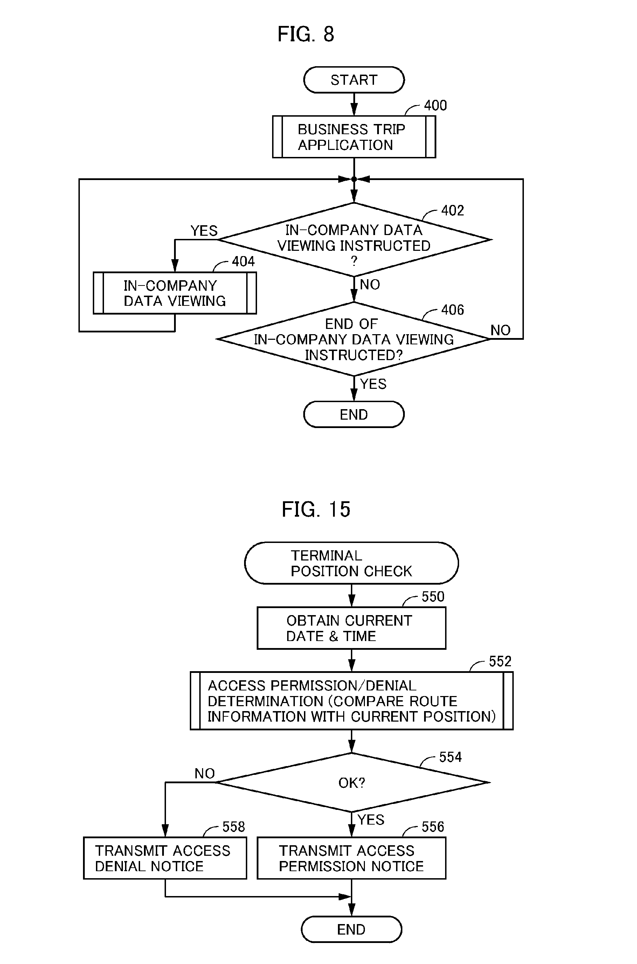

Fig. 8 is a flowchart representing a control structure of a program for executing business trip application and in-company data viewing during the business trip, executed by CPU 70 shown in Fig. 2, of terminal 20.

Referring to Fig. 8, the main program for the business trip application and in-company data viewing process executed by CPU 70 includes: a step 400, activated in response to pressing of f1 button 116 shown in Fig. 4(A) of the initial image display on terminal 20 by the business trip applicant, of activating a business trip application process, which will be described later; a step 402, executed following step 400, of determining whether or not the business trip applicant instructed viewing of in-company data, and branching the control flow depending on the result of determination; a step 404, executed if it is determined at step 402 that viewing of in-company data is instructed, of activating the in-company data viewing process as described later, and after the end of in-company data viewing process, returning the control to step 402; a step 406, executed if it is determined at step 402 that viewing of in-company data is not instructed, of determining whether or not the business trip applicant instructed end of in-company data viewing, and ending the process if there is an end instruction and returning the control to step 402 in the absence of end instruction.

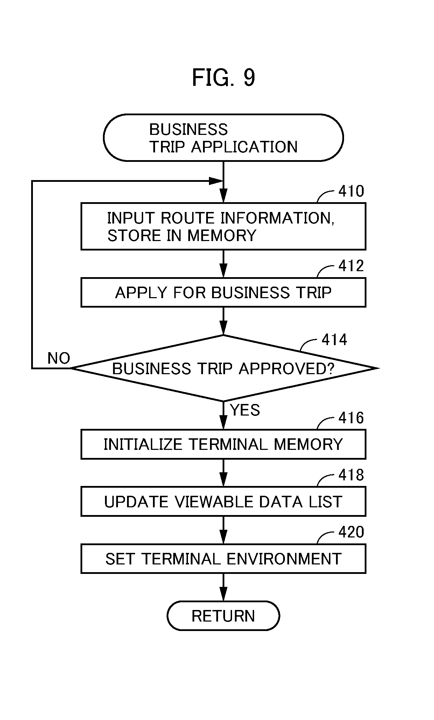

Fig. 9 is a flowchart representing a control structure of a program for performing business trip application, executed at step 400 shown in Fig. 8, in terminal 20. Referring to Fig. 9, the program includes: a step 410 of receiving inputs of business trip applicant using images 118, 140 and 190 shown in Figs. 4(A), (B) and (C), and storing route information having a structure similar to route information packet 352 shown in Fig. 6 in storage unit 54; a step 412, executed following step 410, of transmitting route information packet 352 prepared based on the route information stored at step 410, and user information packet 351 such as shown in Fig. 6, related to terminal 20, to management server 26. User information packet 351 will be described later.

The program further includes: a step 414, executed following step 412, of determining whether or not information of approval of the business trip application transmitted at step 412 is received from management server 26, and returning the control to step 410 until approved; a step 416, executed in response to the determination of approval at step 414, of initializing a storage area for downloading in-company data, in storage unit 54; and a step 418, executed following step 416, of updating the data list to the latest information based on data list packet 358 shown in Fig. 6, transmitted with the approval from management server 26. At step 418, immediately preceding downloaded data list is overwritten by the latest data list, in storage unit 54.

The program further includes a step 420, executed following step 418, of changing hardware and software environment settings of terminal 20, so as to enable communication with management server 26 by 3G, through telephone network communication unit 40 shown in Fig. 2. At step 420, terminal 20 changes settings of components related to wireless communication (telephone network communication unit 40, wireless communication unit 42 and control unit 60) to disable communication with management server 26 by WiFi through wireless communication unit 42 and in-house LAN 24 and enabling only the communication with management server 26 through the Internet 22, from this time point until the period of business trip ends.

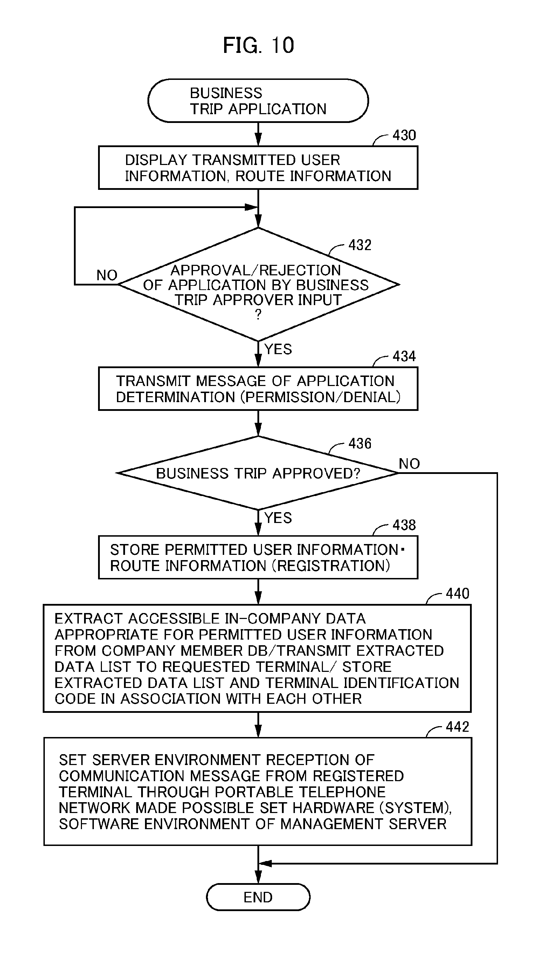

Fig. 10 is a flowchart representing a control structure of a program for performing approval of business trip application, executed by CPU 110 shown in Fig. 3, in management server 26.

Referring to Fig. 10, the program for approving business trip application executed by CPU 110 includes: a step 430, activated in response to an instruction issued by the business trip applicant to management server 26, to perform the work of approving business trip application, of displaying user name information of terminal 20 included in the received user information packet 351 and the route information included in route information packet 352 related to the business trip application, on display unit 94; a step 432, executed following step 430, of determining whether or not the business trip approver has input approval/rejection of the business trip application, and waits until an input is received; and a step 434, executed in response to the determination at step 432 that the input is received, of transmitting information indicating approval/rejection of the business trip application through the second communication unit 92 shown in Fig. 3 to terminal 20. At step 434, if the application is approved, approval notice packet 353 shown in Fig. 6 is formed and transmitted, and otherwise, rejection notice packet 354 is formed and transmitted.

The program further includes a step 436, executed following step 434, of determining whether or not the business trip application has been approved, and branching the control flow depending on the result of determination. At step 436, the determination is YES if the packet transmitted to terminal 20 is approval notice packet 353, and it is NO if the packet is rejection notice packet 354.

The program further includes: a step 438, executed in response to the determination at step 436 that the business trip application is approved, of storing the user name and terminal S/N information included in user information packet 351 of terminal 20 and the route information included in route information packet 352 in correspondence with each other in business trip application DB in storage unit 98 shown in Fig. 3; a step 440, executed following step 438, of searching in company member DB 360 shown in Fig.7 using the user name included in user information packet 351 as a search key, extracting in-company data that can be accessed by terminal 20 from company member DB 360, forming data list packet 358 shown in Fig. 6 based thereon and transmitting it to terminal 20, and storing the data list information that can be viewed by terminal 20 in association with the terminal S/N in storage unit 98; and a step 442, executed following step 440, of changing software and hardware environment settings of management server 26, so that communication with terminal 20 is possible only by 3G through the first communication unit 90 shown in Fig. 3.

At step 442, from this time point to the end of the period of business trip, management server 26 disables communication by WiFi through the second communication unit 92 and in-house LAN 24. Further, management server 26 changes settings of components related to wireless communication of management server 26 (first communication unit 90, second communication unit 92 and control unit 102), such that only the packets having the terminal S/N of terminal 20 attached are received, to perform communication only with terminal 20 through the Internet 22.

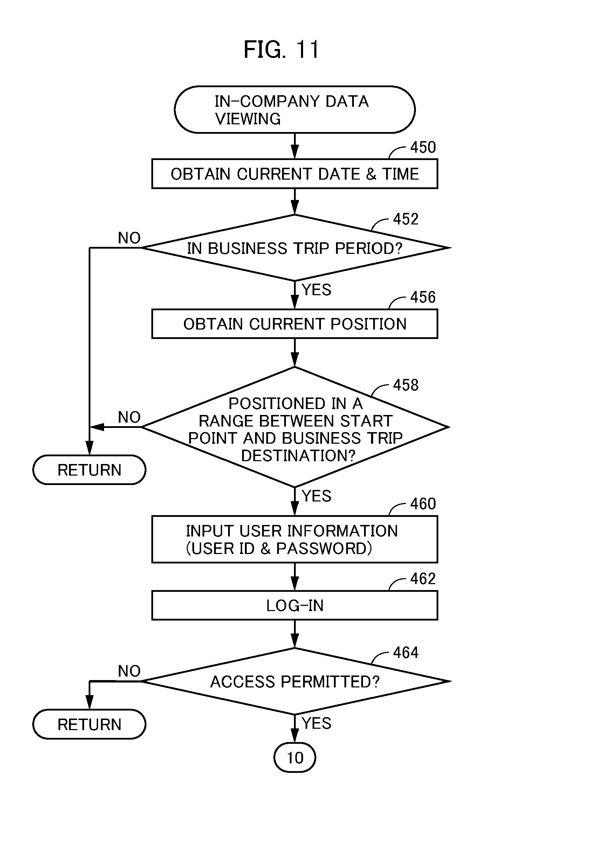

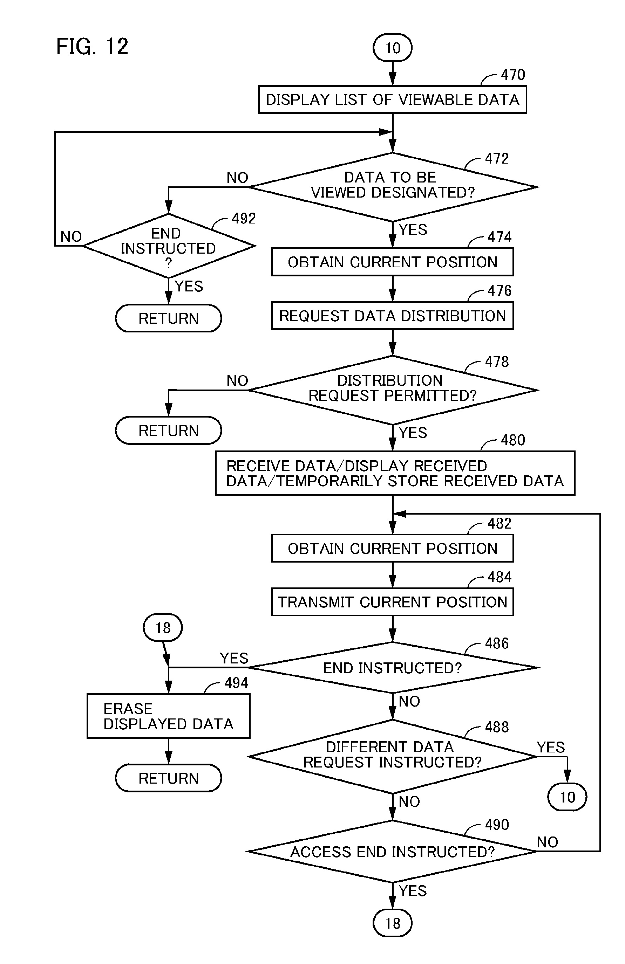

Figs. 11 and 12 are flowcharts representing a control structure of a program for in-company data viewing, executed by CPU 70 at step 404 shown in Fig. 8, in terminal 20.

Referring to Fig. 11, the program includes: a step 450 of obtaining current date and time from time measuring unit 58; a step 452, executed following step 450, of comparing the route information stored in storage unit 54 at step 410 of the business trip application processing program shown in Fig. 9 above with the current date and time obtained at step 450, for determining whether or not the current date and time is in the period of applied business trip, and branching the control flow depending on the result of determination; a step 456, executed in response to the determination at step 452 that it is in the period of business trip, of obtaining current position information of terminal 20 from GPS 56; and a step 458, executed following step 456, of determining whether or not the current position obtained at step 456 is positioned in the range between the start point to any destination in the route information, and branching control flow depending on the result of determination. Here, the determination at step 458 is made in the following manner. From the latitude and longitude information of each destination included in the route information, a rectangular area is formed having the maximum or minimum value of latitude information and the maximum or minimum value of longitude information as four vertexes. If the current position of terminal 20 is within the rectangular area, the determination is YES, and otherwise, the determination is NO.

The program further includes: a step 460, executed in response to the determination at step 458 that the current position is positioned in the range between the start point to a destination, of displaying images 228 and 230 shown in Figs. 5(A) and 5(B) on display unit 50, to receive inputs of user ID and the password from the business trip applicant; and a step 462, executed following step 460, of receiving an input of CONFIRMATION button 254, and executing log-in. At step 462, terminal 20 forms user information packet 351 shown in Fig. 6 from the information input at step 460 and the terminal S/N stored in advance in storage unit 54, and current position information packet 359 shown in Fig. 6 from the current position information obtained at step 456. Further, terminal 20 transmits information indicating log-in, user information packet 351 and current position information packet 359 to management server 26.

The program further includes a step 464, executed following step 462, of determining whether or not information indicating access permission is received from management server 26, and branching control flow depending on the result of determination. At step 464, if terminal 20 has received access permission notice packet 355 shown in Fig. 6 from server 26, the determination is YES, and if it has received access denial notice packet 356, the determination is NO. If the determination is NO at step 452, 458 or 464, the process returns to step 402 shown in Fig. 8.

Referring to Fig. 12, the program further includes: a step 470, executed if it is determined at step 464 shown in Fig. 11 that information indicating access permission has been received, of displaying the data list information stored in storage unit 54 at step 418 shown in Fig. 9 on display unit 50 in the manner of image 270 shown in Fig. 5(C); and a step 472, executed following step 470, of determining whether or not a certain data in the data list is selected and GET button 294 shown in Fig. 5(C) is pressed to designate the data to be viewed, and branching the control flow depending on the result of determination.

The program further includes a step 492, executed in response to the determination at step 472 that the data to be viewed is not designated, of determining whether or not an instruction is made by the business trip applicant to end viewing of in-company data, and returning the flow to step 402 shown Fig. 8 if the end instruction is issued, and to step 472 if the end instruction is not issued.

The program further includes: a step 474, executed in responses to the determination at step 472 that the data to be viewed is designated, of obtaining the current position information related to terminal 20 from GPS 56; a step 476, executed following step 474, of transmitting data request packet 357 shown in Fig. 6 as the request for distributing the designated data to be viewed, as well as user information packet 351 and current position information packet 359, to management server 26; and a step 478, executed following step 476, of determining whether or not information allowing distribution is received from management server 26 in response to the request for distribution at step 476, and branching the control flow depending on the result of determination. The method of determination at step 478 is the same as that at step 464 shown in Fig. 11. If the determination at step 478 is NO, the process returns to step 402 shown in Fig. 8

The program further includes: a step 480, executed in response to the determination at step 478 that the information permitting distribution is received, of receiving the distributed data, displaying the data on display unit 50, and storing the data in storage unit 54; a step 482, executed following step 480, of obtaining the current position information related to terminal 20 from GPS 56; a step 484, executed following step 482, of transmitting current position information packet 359 and terminal S/N to management server 26; and a step 486, executed following step 484, of determining whether or not continuous display of in-company data is determined impossible by an access permission/denial determining process, which will be described later and an instruction to end display is received from management server 26, and branching the control flow depending on the result of determination. The method of determination at step 486 is the same as that of step 464 shown in Fig. 11.

The program further includes a step 494, executed in response to the determination at step 486 that the end instruction is issued, of erasing the data that is being displayed from display unit 50, and returning the process to step 402 shown in Fig. 8.

The program further includes: a step 488, executed in response to the determination at step 486 that the end instruction is not issued, of determining whether or not the user instructed a data distribution request for data different from last received one, and branching the control flow depending on the result of determination; and a step 490, executed in response to the determination at step 488 that a different data distribution request is not issued, of determining whether or not an access end instruction is received from the user, and branching the control flow depending on the result of determination. If it is determined at step 488 that a different data distribution request is issued, the process returns to step 470. If it is determined at step 490 that an access end instruction is issued, the process proceeds to step 494. If it is determined that the access end instruction is not issued, the process returns to step 482.

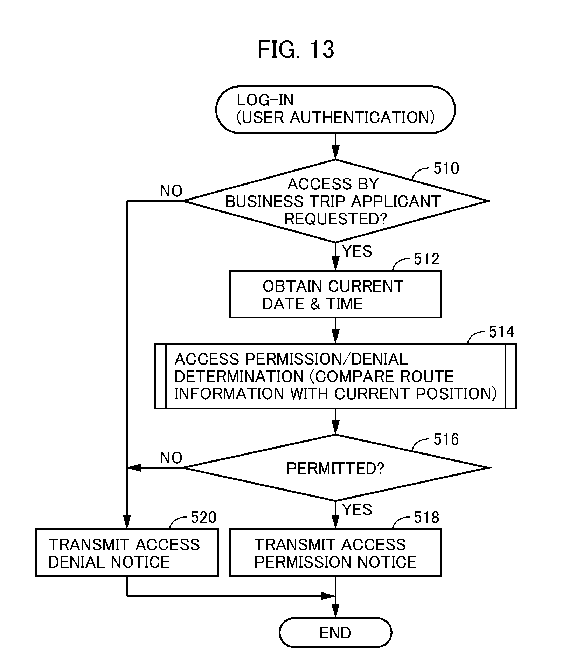

Fig. 13 is a flowchart representing a control structure of the program for user authentication related to in-company data viewing, executed by CPU 110 in management server 26.

Referring to Fig. 13, assuming that terminal 20 executed log-in and transmitted user information packet 351 and current position information packet 359 shown in Fig. 6 together with the the log-in request to management server 26 at step 462 of Fig. 11, and the first communication unit 90 received these, the the program executed by CPU 110 includes a step 510, executed in response to the reception, of determining whether or not the received log-in instruction is an access request by a business trip applicant, and branching the control flow depending on the result of determination. At step 510, determination is YES if the data matching the user name and the password included in user information packet 351 exists in company member DB 360 stored in storage unit 98 and the data matching the terminal S/N and the user name information included in user information packet 351 is included in the business trip application DB stored in storage unit 98, and the determination is NO otherwise.

The program further includes: a step 512, executed in response to the determination at step 510 that it is an access request by the business trip applicant, of obtaining the current date and time from time measuring unit 100; a step 514, executed following step 512, of activating the access permission/denial determining process; a step 516, executed following step 514, of determining whether or not access by terminal 20 is permitted at step 514, and branching the control flow depending on the result of determination; a step 518, executed if it is determined at step 516 that the access is permitted, of transmitting access permission notice packet 355 shown in Fig. 6 to terminal 20 and ending the process; and a step 520, executed in response to the determination of NO at steps 510 and 516, of transmitting access denial notice packet 356 shown in Fig.6, to terminal 20 and ending the process.

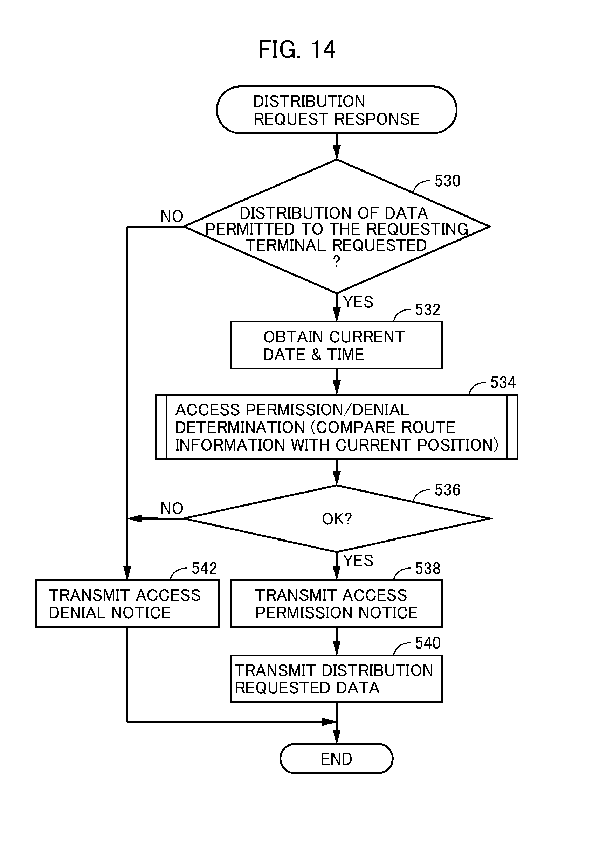

Fig. 14 is a flowchart representing a control structure of a program for responding to the in-company data distribution request from terminal 20, executed by CPU 110 in management server 26.

Referring to Fig. 14, the program includes a step 530, activated when terminal 20 transmitted the distribution request, user information packet 351 and current position information packet 359 and data request packet 357 shown in Fig. 6 to management server 26 at step 476 shown in Fig. 12 and the first communication unit 90 received these, of performing authentication of terminal 20 and authentication as to whether a business trip application has been made for terminal 20 and it is on the business trip, determining whether or not the data of which distribution is requested by terminal 20 is data permitted for the terminal, and branching the control flow depending on the result of determination. At step 530, the result of determination is YES if the data matching the user name and the password information included in user information packet 351 is included in company member DB 360 stored in storage unit 98, the data matching the terminal S/N and the user name information included in user information packet 351 is included in the business trip application DB stored in storage unit 98, and the data indicated by data request packet 357 is in the data list stored in association with the terminal S/N of terminal 20 in storage unit 98. Otherwise, the determination is NO.

The program further includes: a step 532, executed in response to the determination at step 530 that the data of which distribution is requested is the data of which access by terminal 20 is permitted, of obtaining the current date and time from time measuring unit 100; a step 534, executed following step 532, of activating the access permission/denial determining process; a step 536, executed following step 534, of determining whether or not distribution is OK, and branching the control flow depending on the result of determination; a step 538, executed in response to the determination of OK at step 536, of transmitting access permission notice packet 355 shown in Fig. 6 to terminal 20; a step 540, executed following step 538, of transmitting the data of which distribution is requested, to terminal 20; and a step 542, executed in response to the determination of NO at step530 and step 536, of transmitting access denial notice packet 356 to terminal 20. After step 540 or step 542, the process ends.

Fig. 15 is a flowchart representing a control structure of a program for continuing display of data distributed to terminal 20, of checking the terminal position, and deciding whether or not continuous display is possible, executed by CPU 110 in management server 26.

Referring to Fig.15, the program includes: a step 550, executed in response to reception of terminal S/N of terminal 20 and current position information packet 359 transmitted from terminal 20 at step 484 of Fig. 12 by the first communication unit 90, of obtaining the current date and time from time measuring unit 100; a step 552 of executing the access permission/denial process, which will be described later; a step 554, executed following step 552, of determining whether or not an access is OK, and branching the control flow depending on the result of determination; a step 556, executed in response to the determination of access OK at step 554, of transmitting access permission notice packet 355 to terminal 20; and a step 558, executed in response to the determination of access not OK at step 554, of transmitting access denial notice packet 356 to terminal 20. After step 556 or 558, the process ends.

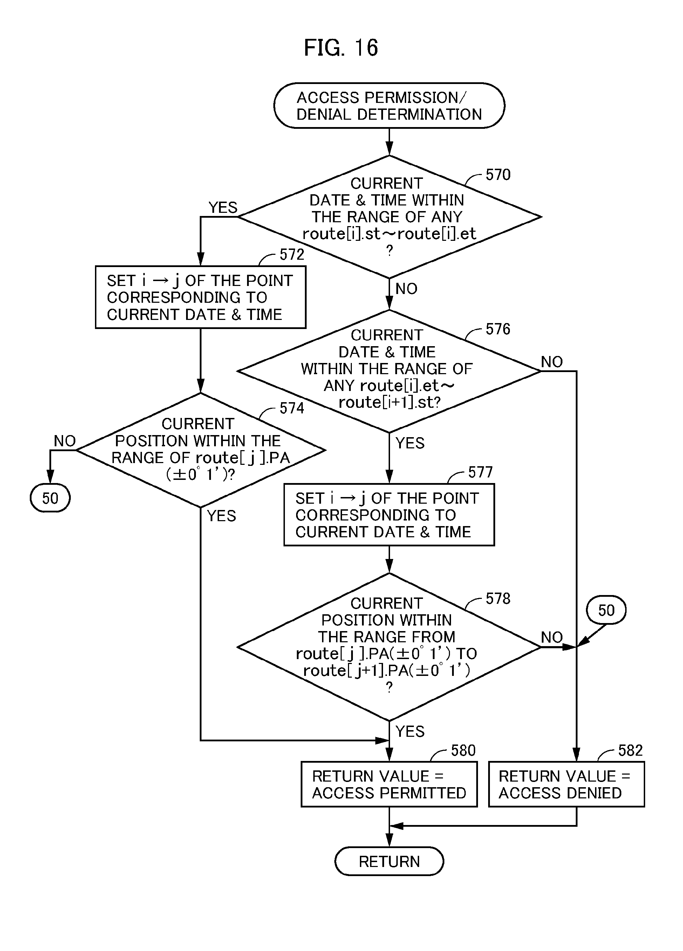

Fig. 16 is a flowchart representing a control structure of a program for determining access permission/denial of in-company data viewing, executed by CPU 110 at step 514 shown in Fig. 13, step 534 shown in Fig. 14, and step 552 shown in Fig. 15.

Referring to Fig. 16, the program includes a step 570 of determining whether or not the current date and time obtained at each of step 512 shown in Fig. 13, step 532 shown in Fig. 14 and step 550 shown in Fig. 15 is within the range of start date and time (route[i].st) and end date and time (route[i].et) at a place indicated by the variable i in the route information of the business trip, and branching the control flow depending on the result of determination.

It is noted that step 570 and other determination steps included in the present program includes the process of making determination by inputting 0 and an integer not smaller than 1 to the variable i in ascending order, proceeding to the next process step if the result of determination is YES with i = a (a is an arbitrary number smaller than cnt), otherwise continuing the process until i = cnt and making a determination of NO, and proceeding to the next process step.

The present program further includes: a step 572, executed in response to the determination that the current date and time is within the range of route[i].st to route[i].et of a certain place at step 570, of inputting a value of variable i satisfying the above-described conditions to a variable j; and a step 574, executed following step 572, of determining whether or not the current position of terminal 20 is within the range of route[j].PA± 0°1' with respect to the place route[j].PA indicated by the variable j.

The program further includes: a step 576, executed in response to the determination at step 570 that the current date and time is not within the range between route[i].st and route[i].et of a certain place, of determining whether the current date and time is within the movement time from one place to another, that is, within the range of any route[i].et to route[i+1].st, and branching the control flow depending on the result of determination; a step 577, executed in response to the determination at step 576 that the current date and time is within the range of any route[i].et to route[i+1].st, of inputting the value of variable i satisfying the above-described conditions to the variable j; and a step 578, executed following step 577, of determining whether or not the current position is within the range from the j-th place to the j+1-th place, that is, within the range of route[j].PA± 0°1' to route[j+1].± 0°1', and branching the control flow depending on the result of determination.

At step 578, specifically, the following determination is made. For convenience of description, assume that the latitude and longitude of route[j].PA are Nⱼ degrees north latitude and Eⱼ degrees east longitude, and the latitude and longitude of route[j+1].PA are Nⱼ₊₁ degrees north latitude and Eⱼ₊₁ degrees east longitude. From the relation of latitude and longitude of the j-th and j+1th places, the range between route[j].PA± 0°1' and route[j+1].± 0°1' is as follows:
1) Latitude range Nₓ
   (1) If Nⱼ > Nⱼ₊₁, Nⱼ+0°1' ≥ Nₓ ≥ Nⱼ₊₁-0°1'
   (2) If Nⱼ < Nⱼ₊₁, Nⱼ-0°1' ≤ Nₓ ≤ Nⱼ₊₁+0°1'
   (3) If Nⱼ = Nⱼ₊₁, Nⱼ-0°1' ≤ Nₓ ≤ Nⱼ+0°1'
2) Longitude range Eₓ
   (1) If Eⱼ > Fⱼ₊₁, Eⱼ+0°1' ≥ Eₓ ≥ Eⱼ₊ᵢ-0°1'
   (2) If Eⱼ < Eⱼ₊₁, Eⱼ-0°1' ≤ Eₓ ≤ Eⱼ₊₁+0°1'
   (3) If Eⱼ = Eⱼ₊₁, Eⱼ-0° 1' ≤ Eₓ ≤ Eⱼ+0°1'
   The program further includes: a step 580, executed in response to the determination at step 574 that the current position is within the position range of route[j].PA±0°1', or the determination at step 578 that the current position is within the position range of route[j].PA± 0°1' to route[j+1].± 0°1', of inputting a value indicating access permission to a return value; and a step 582, executed in response to the determination of NO at step 574, step 576 or step 578, of inputting a value indicating access denial to the return value. After step 580 and 582, the process ends.

### [Operation]

System 10 having the above-described configuration operates in the following manner. In the following, for convenience of description, it is assumed that main power of all components related to management server 26 are constantly kept on.

Referring to Fig. 2, assume that the business trip applicant starts use of terminal 20. After the main power of terminal 20 is turned on, display unit 50 displays an image, not shown, to allow input of user name and the password. After receiving the user input, the input user name and password are temporarily stored in RAM 74. In the following, for convenience of description, it is assumed that main power of all components related to terminal 20 is constantly kept on.

Assume that from the initial image, f1 button 116 shown in Fig. 4 is pressed. Image 118 of Fig. 4(A) is displayed on display unit 50. When BUSINESS TRIP APPLICATION button 120 is pressed, image 140 of Fig. 4(B) is displayed, and the program having the control structure shown in Fig. 8 is activated. On the other hand, management server 26 receives an instruction to execute the business trip application approving process from the business trip approver, and the program having the control structure shown in Fig. 10 is activated.

At step 410 shown in Fig. 9, route information of the business trip is input through image 140, and as the REGISTRATION button 176 is pressed, the information is stored in storage unit 54. With this, at step 412, CPU 70 forms user information packet 351 from the terminal S/N stored in advance in storage unit 54, and the user name and password input at the time of power on. Further, CPU 70 forms route information packet 352 from the route information stored in storage unit 54 at step 410. CPU 70 transmits user information packet 351 and route information packet 352 through wireless communication unit 42 and in-house LAN 24 to management server 26.

Referring to Fig. 3, thereafter, the signal from terminal 20 received by the second communication unit 92 is temporarily stored in storage unit 98. In management server 26, at steps 430 to 434 of Fig. 10, from the signals received from terminal 20 in connection with the business trip application, the user name of the business trip applicant and the route information are read and displayed on display unit 50. Based on these pieces of information, the business trip approver approves the business trip application. If approved, CPU 110 transmits approval notice packet 353 shown in Fig. 6, and if not, rejection notice packet 354, to terminal 20.

At the time of approval, at steps 436 to 442, CPU 110 stores the user name and the terminal S/N information included in user information packet 351 and the route information included in route information packet 352 in correspondence with each other in business trip application DB in storage unit 98. Further, it searches in company member DB 360 shown in Fig. 7 using the user name included in user information packet 351 as a search key, for the information of the corresponding business trip applicant. From the information, CPU 110 extracts the folder name of in-company data and file names in the folder, to which access by the business trip applicant is permitted, forms a list, and forms data list packet 358 shown in Fig. 6. CPU 110 transmits the data list packet 358 to terminal 20. Further, CPU 110 stores the data list viewable from terminal 20 and the terminal S/N included in user information packet 351 in association with each other in storage unit 98. Further, CPU 110 changes communication environment of management server 26 such that only the packet having the terminal S/N of terminal 20 attached is received through the first communication unit 90 and the Internet 22. Thereafter, until the period of business trip starts and the business trip applicant instructs viewing of the in-company data, the process steps 402 and 406 in the program having the control structure shown in Fig. 8 are repeated.

Assume that the period of business trip starts, image 228 of Fig. 5(A) is displayed on terminal 20 and IN-COMPANY DATA VIEWING button 122 is pressed. CPU 70 of terminal 20 executes the program having the control structure shown in Figs. 11 and 12. At steps 450 to 458, terminal 20 performs the permission/denial process of in-company data viewing on the terminal itself, based on the date and time and the place of stay at the time of executing the process. CPU 70 obtains the current date and time from time measuring unit 58 and the current position information from GPS 56, respectively, and compares these with the route information stored in storage unit 54. Only if the present date and time corresponds to the period of business trip and the current position information is in the area determined by the latitude and longitude information of the place included in the route information, CPU 70 causes the control flow to proceed to log-in process for the in-company data viewing.

Thereafter, for the log-in (user authentication), in-company data viewing (distribution request) and continuous display of in-company data by terminal 20, at the time of executing log-in, at the time of requesting distribution and at the time of displaying in-company data, CPU 70 transmits user information packet 351 and current position information packet 359 including the current position information obtained each time by GPS 56, to management server 26. CPU 110 of management server 26 compares the user information and the current position information included in user information packet 351 and current position information packet 359 transmitted from terminal 20 and the current time measured by time measuring unit 100 at each time with the user information and the route information related to terminal 20, stored in company member DB and business trip application DB stored in storage unit 98.

If the user information is included in company member DB and the user information matches the user information in the business trip application DB, CPU 110 authenticates terminal 20. Further, if the date and time and the place indicated by the current time and current position information match the activity plan of terminal 20 (business trip applicant) indicated by the route information stored in association with the user information in business trip application DB, CPU 110 permits access to the in-company data, and otherwise denies access. Further, CPU 110 transmits a signal corresponding to the result of access permission/denial determination to terminal 20. Transmission/reception between terminal 20 and management server 26 thereafter utilizes the Internet 22. More specifically, at the time of executing log-in, requesting distribution and displaying in-company data, terminal 20 and management server 26 operate in the following manner.

### <Log-in (User Authentication)>

At steps 460 and 462 of Fig. 11, CPU 70 of terminal 20 displays image 230 shown in Fig. 5(B) on display unit 50, and receives inputs of user name and password. When CONFIRMATION button 254 is pressed, the input user name and the password are temporarily stored in RAM 74. From these pieces of information and the terminal S/N stored in storage unit 54, user information packet 351 is formed. The formed user information packet 351 is used for Internet communication. CPU 70 transmits a log-in request, user information packet 351 and current position information packet 359 to management server 26.

Receiving information signal indicating log-in from terminal 20, CPU 110 of management server 26 activates the program having the control structure shown in Fig. 13. At step 510, using the user name included in user information packet 351 as a search key, company member DB 360 in storage unit 98 is searched, to determine whether the user name is included in company member DB 360 and the same password as included in user information packet 351 is stored in correspondence with the user name, in company member DB 360. If these conditions are satisfied, CPU 110 further searches business trip application DB in storage unit 98 using the terminal S/N as a search key, to determine whether or not the terminal S/N is included in the business trip application DB and the same user name as in user information packet 351 is stored in the business trip application DB. If these conditions are satisfied, determination at step 510 is YES. At step 512, CPU 110 obtains the current time, from time measuring unit 100. Further, CPU 110 reads the route information corresponding to the terminal S/N from the business trip application DB using the terminal S/N as a search key. Based on the route information and the current time, CPU 110 performs the access permission/denial determining process shown in Fig. 16.

In the access permission/denial determining process, access by terminal 20 is permitted if the following conditions are satisfied.
1) The current date and time is within the expected stay time (start time to end time) of any of the destinations included in the route information, and the current position is in the range of ±0°1' from the destination.
2) The current date and time is between an end time of a certain destination and a start time of the next destination included in the route information, and the current position is within the range of ±0°1' from the certain destination to ±0°1' from the next destination.
   If conditions 1) or 2) are satisfied, CPU 110 inputs access permission to the return value. If the access permission value is returned, at steps 516 and 518 shown in Fig. 13, CPU 110 transmits access permission notice packet 355 shown in Fig. 6 to terminal 20 through the first communication unit 90 and the Internet 22. In response, the process on the side of terminal 20 proceeds to step 470 of Fig. 12.

If the user information is not included in the company member DB or the business trip application DB, and if conditions of 1) or 2) are not satisfied, the return value is access denial. In the similar manner as access permission, at steps 516 and 520 shown in Fig. 13, CPU 110 transmits access denial notice packet 356 shown in Fig. 6 to terminal 20. In response, CPU 70 of terminal 20 displays a message of access denial on display unit 50, and again displays image 228 of Fig. 5(A). The process returns to step 402 of Fig. 8, to wait for a next instruction of in-company data viewing.

### <In-company Data Viewing (Distribution)>

When terminal 20 receives the access permission notice, at step 470 shown in Fig. 12, CPU 70 of the terminal displays data list 290 included in image 270 of Fig. 5(C) on display unit 50. Here, if the business trip applicant selects one data and presses GET button 294 as shown in Fig. 5(C), CPU 70 forms data request packet 357 shown in Fig. 6. At steps 474 and 476 shown in Fig. 12, CPU 70 obtains the current position information from GPS 56, forms user information packet 351 and current position information packet 359, and transmits these in addition to the data distribution request and data request packet 357, to management server 26.

In response to reception of signals from terminal 20, CPU 110 of management server 26 activates the distribution request response process shown in Fig. 14. At step 530, CPU 110 authenticates terminal 20 in the similar manner as at step 510 of Fig. 13. If authorized, CPU 110 determines whether or not the data indicated by data request packet 357 is included in the data list stored in storage unit 98 in association with the S/N of the terminal. If the determination is YES, CPU 110 obtains the current time at step 532, and performs the access permission/denial determining process in the similar manner as at log-in. The process of access permission/denial determination and the process of transmitting corresponding message to terminal 20 are the same as in the log-in process. It is noted that, here, if the access is permitted, the requested data is additionally transmitted to terminal 20.

When terminal 20 receives the access permission notice packet 355 and the data of which distribution is requested from management server 26, at steps 478 to 484 of Fig. 12, CPU 70 of terminal 20 stores the received data in storage unit 54 and displays on display unit 50.

### <Position Checking for Continuous Display of In-company Data>

Further, CPU 70 obtains the current position information from GPS 56, and transmits current position information packet 359 and terminal S/N to management server 26.

Receiving signals from terminal 20, CPU 110 of management server 26 activates the program of terminal position checking process shown in Fig. 15. CPU 110 performs the access permission/denial determination process as in the case of log-in. The process of access permission/denial determination and the process of transmitting corresponding message to terminal 20 are the same as in the log-in process.

Thereafter, terminal 20 receives access permission notice packet 355 or access denial notice packet 356 from management server 26. CPU 70 makes the determination of step 486 shown in Fig. 12.

If access permission notice packet 355 is received, CPU 70 repeats the process of steps 482 to 490, until an instruction to request distribution of another data, or an instruction to end access is received.

If access denial notice packet 356 is received, CPU 70 erases the display of distributed data. The process steps thereafter are similar to those when the access is denied at the time of log-in.

Assume that during the process of steps 482 to 490, END button 334 is pressed while image 310 shown in Fig. 5(D) is being displayed, and thereafter with the image 270 being displayed, data different from the one that has been displayed is selected and GET button 294 is pressed. Then, determination at step 488 shown in Fig. 12 is YES, and CPU 70 again performs the process following step 470.

During the process of steps 482 to 490, if VIEWING END button 336 is pressed while image 310 shown in Fig. 5(D) is being displayed, the determination at step 490 shown in Fig. 12 is YES, and thereafter, process steps when the access is denied at the time of log-in are preformed.

As described above, system 10 in accordance with the present embodiment enables viewing of in-company data in a secure environment during a business trip. Even if an authorized terminal belonging to the system should be stolen, it is difficult for an unauthorized user to view the in-company data, since log-in is impossible without inputting a user ID and the password, and further, viewing is impossible unless it is the date and time of the applied business trip and at the applied place. Further, if the data is once distributed, the data display is erased if the conditions of date and time or place are no longer satisfied. In addition, in-company data that can be viewed from each terminal is limited, so that the risk of information leakage is low.

As described above, according to the present embodiment, it is possible for an authorized user to view information in the server from a place far away from the server, and the leakage of information in the server can be prevented.

### [Modification]

In the present embodiment, the server makes a determination of access permission/denial based on whether the current position of the terminal is at the place indicated by the route information, or in the range between a certain destination and a next destination. The present invention, however, is not limited to such an embodiment. Any manner that allows determination of access permission/denial may be adopted, by setting prescribed conditions between the route information indicating planned destinations and the current position, and determining whether or not the prescribed conditions are satisfied.

By way of example, from the latitude and longitude information of each destination included in the route information, a rectangular area having four points obtained by combining the maximum or minimum value of the latitude information and the maximum or minimum value of the longitude information as vertexes may be formed, and access may be permitted if the current position of the terminal is within the rectangular area.

The embodiments as have been described here are mere examples and should not be interpreted as restrictive. The scope of the present invention is determined by each of the claims with appropriate consideration of the written description of the embodiments and embraces modifications within the meaning of, and equivalent to, the languages in the claims.

### INDUSTRIAL APPLICABILITY

The present invention may be used for the industry of manufacturing, using, or leasing a server apparatus, a terminal apparatus and information viewing system including the server apparatus and the terminal apparatus for safe communication that has low risk of information leakage.

## Claims

1. A server for distributing content to a prescribed terminal, comprising:
storage means for storing terminal use schedules indicating scheduled use of the terminal in association with an identifier of the terminal; wherein
each of said terminal use schedules includes one or a plurality of planned activities;
each of said planned activities includes a date and time item specifying date and time, and a location item specifying expected position of the terminal at the corresponding date and time;
said server further comprising
receiving means for receiving a distribution request related to the content; wherein
said distribution request includes an identifier of a transmission terminal that transmitted the distribution request, position information, and an identifier of content of which distribution is requested;
said server further comprising:
time measuring means for specifying date and time of reception of said distribution request;
distribution control means comparing said position information included in said distribution request and said date and time of reception specified by said time measuring means, with said terminal use schedule stored in said storage means in association with the identifier of said transmission terminal included in the distribution request, and thereby deciding whether or not the content is to be distributed; and
distributing means, responsive to decision by said distribution control means to distribute the content, for distributing the content identified by said content identifier to said transmission terminal.

2. The server according to claim 1, wherein
said distribution control means includes
use schedule reading means for reading, from said storage means, said terminal use schedule associated with an identifier of said transmission terminal included in said distribution request from among the terminal use schedules,
first determining means for determining whether or not said date and time of reception and the position information included in said distribution request match a planned activity specified by the date and time item and the location item included in one or a plurality of planned activities included in the terminal use schedule read by said use schedule reading means,
second determining means, responsive to determination by said first determining means that said date and time of reception and the position information included in said distribution request do not match said specified planned activity, for determining whether or not the position information matches an expected route of movement specified by two date and time items and two pieces of position information included in continuous two planned activities read by said use schedule reading means, and
deciding means for deciding distribution of content, if said first determining means or said second determining means determines that said date and time of reception and the position information included in said distribution request match said specified planned activity or said specified expected route of movement.

3. The server according to claim 1, further comprising:
content storage means for storing said content; and
user information storage means for storing information of a user using said terminal; wherein
said user information storage means stores, as said user information, access permission folder information indicating a storage area in said content storage means storing where said content of which distribution to said user is permitted is stored;
said terminal use schedule includes said user information;
said server further comprising
means, responsive to storage of said terminal use schedule in said storage means, for forming a list of content identifiers of said content stored in said storage area of said content storage means designated by the access permission folder information of said user, and transmitting the list to said terminal.

4. The server according to any of claims 1 to 3, further comprising:
display means for displaying various pieces of information; and
means for displaying said terminal use schedule on said display means.

5. The server according to any of claims 1 to 4, further comprising
means, responsive to an instruction to store or not to store use schedule of said terminal in said storage means, for transmitting a message of permission or denial of registration of the use schedule, respectively, to said terminal.

6. The server according to claim 1 or 2, wherein
said location information includes position information; and
said position information is latitude and longitude information.

7. The server according to claim 2, further comprising
means, responsive to decision by said deciding means to distribute or not to distribute the content, for transmitting an access permission notice or an access denial notice, respectively, to said terminal.

8. A content distribution system including a prescribed terminal and a server for distributing content to said terminal; wherein
said server includes
storage means for storing terminal use schedules indicating scheduled use of the terminal in association with an identifier of the terminal; wherein
each of said terminal use schedules includes one or a plurality of planned activities;
each of said planned activities includes a date and time item specifying date and time, and a location item specifying expected position of the terminal at the corresponding date and time;
said terminal includes
position information obtaining means for obtaining position information indicating a position where said terminal is present, and
distribution requesting means for transmitting a content distribution request including an identifier of the terminal, said position information and a content identifier of the content of which distribution from said server is requested;
said server further includes
receiving means for receiving the distribution request related to said content from said terminal,
time measuring means for specifying date and time of reception of said distribution request, distribution control means comparing said position information included in said distribution request and said date and time of reception specified by said time measuring means, with said terminal use schedule stored in said storage means in association with the identifier of said terminal included in the distribution request, and thereby deciding whether or not the content is to be distributed, and
distributing means, responsive to decision by said distribution control means to distribute the content, for distributing the content identified by said content identifier to said terminal;
said terminal further includes
content display means for receiving and displaying the content distributed from said server to said terminal in response to said distribution request.

9. The content distribution system according to claim 8, wherein
in said server,
said distribution control means includes
use schedule reading means for reading, from said storage means, said terminal use schedule associated with an identifier of said transmission terminal included in said distribution request from among the terminal use schedules,
first determining means for determining whether or not said date and time of reception and the position information included in said distribution request match a planned activity specified by the date and time item and the location item included in one or a plurality of planned activities included in the terminal use schedule read by said use schedule reading means,
second determining means, responsive to determination by said first determining means that said date and time of reception and the position information included in said distribution request do not match said specified planned activity, for determining whether or not the position information matches an expected route of movement specified by two date and time items and two pieces of position information included in continuous two planned activities read by said use schedule reading means, and
deciding means for deciding distribution of content, if said first determining means or said second determining means determines that said date and time of reception and the position information included in said distribution request match said specified planned activity or said specified expected route of movement.

10. The content distribution system according to claim 8, wherein
said server further includes
content storage means for storing said content, and
user information storage means for storing information of a user using said terminal;
said user information storage means stores, as said user information, access permission folder information indicating a storage area in said content storage means storing where said content of which distribution to said user is permitted is stored;
said terminal use schedule includes said user information;
said server further includes
means, responsive to storage of said terminal use schedule in said storage means, for forming a list of content identifiers of said content stored in said storage area of said content storage means designated by the access permission folder information of said user, and transmitting the list to said terminal; and
said terminal further includes
means for receiving and displaying said list of content identifiers transmitted by said means for transmitting to said terminal.

11. The content distribution system according to claim 8 or 9, wherein
said server further includes
means, responsive to an instruction to store or not to store use schedule of said terminal in said storage means, for transmitting a message of permission or denial of registration of the use schedule, respectively, to said terminal; and
said terminal further includes
means for receiving and displaying said message from said transmitting means.

12. The content distribution system according to any of claims 8 to 11, wherein
said server further includes
display means for displaying various pieces of information, and
means for displaying use schedule of said terminal on said display means.

13. The content distribution system according to claim 8 or 9, wherein
said location information includes position information; and
said position information is latitude and longitude information.

14. The content distribution system according to claim 9, wherein
said server further includes
means, responsive to decision by said deciding means to distribute or not to distribute the content, for transmitting an access permission notice or an access denial notice, respectively, to said terminal; and
said terminal further includes means for receiving said access permission notice or said access denial notice, and for performing a corresponding process, respectively.

15. A method of controlling content display in a content distribution system including a server responsive to a content distribution request transmitted from an arbitrary terminal, for distributing said content to the terminal that transmitted the distribution request, a terminal transmitting a content distribution request to the server and for displaying the content distributed from said server in response to the distribution request, and storage means for storing terminal use schedules indicating use schedule of said terminal; wherein
each of said terminal use schedules includes one or a plurality of planned activities, and each of said planned activities includes a date and time item specifying date and time, and a location item specifying expected position of the terminal at the corresponding date and time;
said method comprising the steps of:
comparing position information and date and time information of said terminal, using a time point when said terminal transmits said distribution request to said server as a start point, with the terminal use schedule stored in said storage means; and
depending on the result of comparison at said comparing step, enabling or disabling display of content distributed from said server to said terminal in response to said distribution request.
